# EUROPÄISCHE PATENTSCHRIFT

(11) **EP 1 522 229 B1**
(45) Veröffentlichungstag und Bekanntmachung des Hinweises auf die Patenterteilung: **02.01.2008**
(21) Anmeldenummer: 04017790.9
(22) Anmeldetag: 28.07.2004
(51) Int. Cl.: A43B 23/07, A43B 1/00, A43B 7/00, A62D 5/00, B32B 27/00

(54) **Schuh, insbesondere Stiefel, mit ABC-Schutz**
Shoe, in particular boot, with ABC protection
Chaussure, en particulier botte, avec ABC protection

(30) Priorität: 09.10.2003 DE 10347673
(43) Veröffentlichungstag der Anmeldung: 13.04.2005
(60) Teilanmeldung: 07016528.7
(73) Patentinhaber: Blücher GmbH, 40699 Erkrath (DE)
(72) Erfinder: von Blücher, Hasso, 40699 Erkrath (DE)
(74) Vertreter: Gesthuysen, von Rohr & Eggert

(56) Entgegenhaltungen:
- WO-A-20/04020089
- DE-B- 2 814 209
- US-A- 4 843 739
- US-A1- 2003 236 047

## Beschreibung

Die vorliegende Erfindung betrifft einen Schuh, insbesondere einen Stiefel, mit Schutzfunktion gegenüber chemischen Giften, insbesondere chemischen Kampfstoffen, nach dem Oberbegriff des Anspruchs 1, insbesondere für den militärischen Einsatz oder für den ABC-Einsatz.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen eine geeignete Schutzausrüstung tragen bzw. durch geeignete Schutzmaterialien gegen diese Gifte geschützt werden.

Zum Schutz des Körpers, insbesondere der Extremitäten und des Rumpfes, gibt es entsprechende Schutzanzüge. Zum Schutz des Kopfes, insbesondere des Gesichtes, sowie der Atemwege werden in der Regel Gasmasken (ABC-Schutzmasken), gegebenenfalls zusammen mit Kapuzen, getragen.

Des weiteren ist aber auch darauf zu achten, daß auch die Füße mit einem ausreichenden Schutz gegenüber solchen Giften ausgestattet sind. Insbesondere muß ein solches schützendes Schuhwerk für den militärischen Einsatz oder den ABC-Einsatz geeignet sein.

Zu diesem Zweck werden gemäß dem Stand der Technik für den militärischen Einsatz bzw. den ABC-Einsatz Überschuhe mit ABC-Schutz eingesetzt, die über das eigentliche Schuhwerk übergezogen werden. Dies hat den entscheidenden Nachteil, daß das Schuhwerk mit zusätzlichem Gewicht belastet wird und zudem der Tragekomfort aufgrund des ABC-Überschuhs drastisch reduziert wird. Schließlich ist bei der Verwendung des ABC-Überschuhs keine effiziente abdichtende Verbindung mit dem ABC-Schutzanzug möglich, so daß chemische Gifte, z. B. Kampfstoffe, den Übergang von ABC-Überschuh und ABC-Schutzanzug passieren und auf den Träger des ABC-Schutzanzugs einwirken können.

Die alternative Verwendung von ABC-Schutzsocken, die z. B. in herkömmlichen Militärstiefeln getragen werden können, ist gleichermaßen wenig effizient, da diese zum einen nicht das Eindringen von Giften in das eigentliche Schuhwerk verhindern können und zum anderen der Tragekomfort nicht sehr groß ist. Auch hier besteht das Problem der mangelnden Abdichtung des Übergangs zum ABC-Schutzanzug.

Die auf den Erfinder der vorliegenden Erfindung Selbst zurückgehende US-Patentschrift 4 843 739 betrifft ein Schuhinnenmaterial mit adsorbierenden Eigenschaften, wie beispielsweise ein Innenfutter, eine Brandsohle, eine Einlagesohle, ein Fußbett oder ein Abdeckmaterial, wobei das Schuhinnenmaterial Aktivkohleteilchen als Adsorptionsmaterial umfaßt, welchen auf der dem Fuß abgewandten Seite des Materials punktförmig mittels einer Haftmasse fixiert sind. Eine zusätzliche Membran ist als weitere Schutzmaßnahme gegen das Eindringen von chemischen Giften und zur Verhinderung der Erschöpfung der Adsorptionskapazität der Aktivkohle in dieser Druckschrift nirgends vorgesehen.

Es ist daher die Aufgabe der vorliegenden Erfindung, einen Schuh, insbesondere einen Stiefel, mit Schutzfunktion gegenüber chemischen Giften, insbesondere chemischen Kampfstoffen, bereitzustellen, welcher sich insbesondere für den militärischen Einsatz oder den ABC-Einsatz eignet und die zuvor geschilderten Nachteile des Standes der Technik zumindest teilweise vermeidet.

Zur Lösung der zuvor geschilderten Aufgabe schlägt die vorliegende Erfindung ein Schuh, insbesondere einen Stiefel (z. B. Militärstiefel oder ABC-Schutzstiefel), gemäß Anspruch 1 vor. Weitere, vorteilhafte Ausgestaltungen des erfindungsgemäßen Schuhs sind Gegenstand der Unteransprüche.

Die grundlegende Idee der vorliegenden Erfindung besteht darin, einen Schuh, insbesondere einen Stiefel, mit mehrschichtigem Schichtaufbau, welcher einen im Tragezustand vom Fuß abgewandte Außenschicht und eine der Außenschicht zugeordnete, im Tragezustand dem Fuß zugewandte Innenschicht, insbesondere ein Schuhinnenfutter, aufweist, dadurch mit einer Schutzfunktion gegenüber chemischen Giften, insbesondere chemischen Kampfstoffen, auszurüsten, daß einerseits zwischen der Außenschicht und der Innenschicht eine Adsorptionsschicht auf Basis eines chemische Gifte adsorbierenden Adsorptionsmaterials, insbesondere Aktivkohle, angeordnet bzw. vorgesehen ist und daß andererseits mindestens eine gegenüber chemischen Giften, insbesondere chemischen Kampfstoffen, zumindest im wesentlichen undurchlässige oder aber den Durchtritt zumindest verzögernde Membran vorgesehen ist, wobei die wasserdampfdurchlässig ausgebildet ist.

Auf diese Weise wird zum einen erreicht, daß gegebenenfalls durch die Außenschicht des Schuhs eingedrungene chemische Gifte, insbesondere chemische Kampfstoffe, nicht mit dem Fuß in Kontakt kommen können, da sie vom Adsorptionsmaterial, insbesondere Aktivkohle, der Adsorptionsschicht aufgenommen bzw. adsorbiert und auf diese Weise unschädlich gemacht werden können.

Die Schutzfunktion der Adsorptionsschicht bzw. letztendlich des Schuhs wird zum anderen noch dadurch gesteigert, daß der erfindungsgemäße Schuh zusätzlich mit mindestens einer Membran ausgestattet wird, die gegenüber chemischen Giften, insbesondere chemischen Kampfstoffen, zumindest im wesentlichen undurchlässig ist oder deren Durchtritt zumindest verzögert. Grundsätzlich kann die Membran entweder zwischen der Außenschicht und der Adsorptionsschicht oder aber zwischen der Innenschicht und der Adsorptionsschicht angeordnet sein. Vorteilhafterweise ist die Membran aber zwischen der Außenschicht und der Adsorptionsschicht angeordnet, so daß gegebenenfalls eingedrungene chemische Gifte, insbesondere chemische Kampfstoffe, die Adsorptionsschicht nicht oder zumindest zu einem überwiegenden Teil gar nicht erst erreichen, so daß die Adsorptionskapazität der Adsorptionsschicht quasi unerschöpflich bleibt. Durch das Vorsehen der zusätzlichen Membran wird gleichzeitig eine gute Dekontaminierbarkeit und Regenerierbarkeit des erfindungsgemäßen Schuhs erreicht.

Weitere Vorteile, Eigenschaften, Aspekte und Merkmale der vorliegenden Erfindung ergeben sich aus der folgenden Beschreibung eines in der Zeichnung dargestellten, bevorzugten Ausführungsbeispiels. Es zeigt:
- Fig. 1: eine schematische Darstellung eines Schuhs, insbesondere Stiefels, gemäß einem bevorzugten Ausführungsbeispiel der Erfindung;
- Fig. 2: eine schematische Schnittdarstellung durch den Schichtaufbau eines erfindungsgemäßen Schuhs, insbesondere Stiefels, gemäß einem bevorzugten Ausführungsbeispiel der Erfindung.

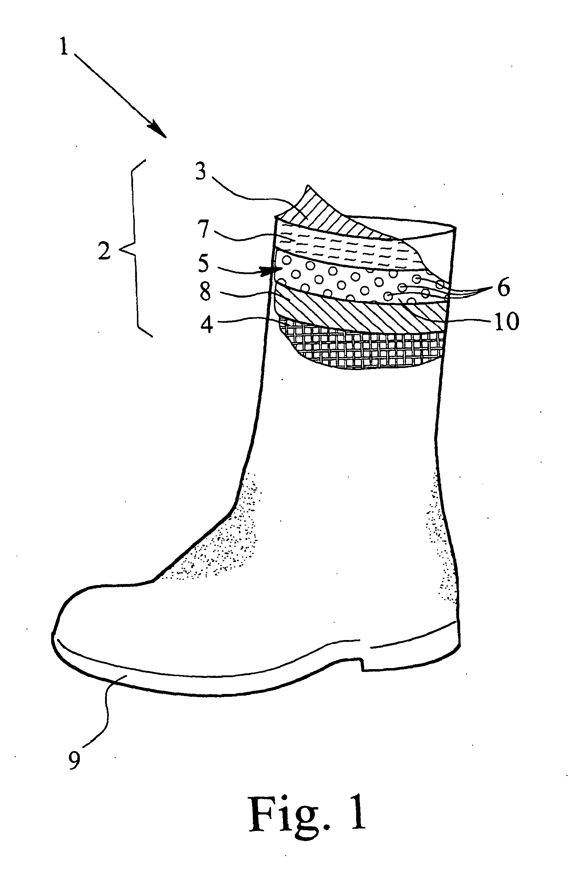

Fig. 1 zeigt einen erfindungsgemäßen Schuh 1, insbesondere Stiefel, mit Schutzfunktion gegenüber chemischen Giften, insbesondere chemischen Kampfstoffen. Der erfindungsgemäße Schuh 1 weist einen mehrschichtigen Schichtaufbau 2 mit einer außenseitigen (d. h. im Tragezustand vom Fuß abgewandten) Außenschicht 3 und einer der Außenschicht 3 zugeordneten, innenseitigen (d. h. im Tragezustand dem Fuß zugewandten) Innenschicht 4, insbesondere einem Schuhinnenfutter, auf. Zwischen der Außenschicht 3 und der Innenschicht 4 ist erfindungsgemäß zusätzlich eine Adsorptionsschicht 5 mit einem chemische Gifte adsorbierenden Adsorptionsmaterial 6, insbesondere Aktivkohle, angeordnet. Hierdurch wird ein effizienter Schutz gegenüber chemischen Giften, insbesondere chemischen Kampfstoffen, bei gleichzeitig hohem Tragekomfort gewährleistet.

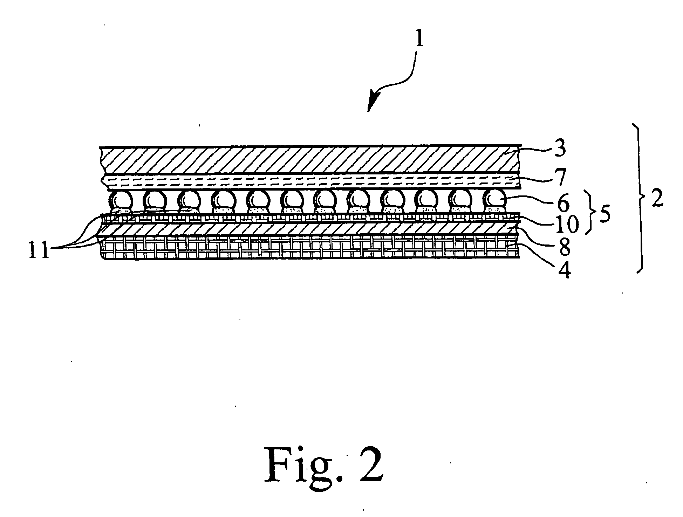

Wie aus den Fig. 1 und 2 ersichtlich, weist der erfindungsgemäße Schuh 1 zusätzlich zu der Adsorptionsschicht 5 mindestens eine Membran 7, die gegenüber chemischen Giften, insbesondere chemischen Kampfstoffen, zumindest im wesentlichen undurchlässig ist oder aber deren Durchtritt zumindest verzögert, auf. Zur Erhöhung des Tragekomforts ist diese Membran 7 zumindest im wesentlichen wasser- und luftundurchlässig, aber wasserdampfdurchlässig ausgebildet. Die Membran 7 kann grundsätzlich entweder zwischen der Außenschicht 3 und der Adsorptionsschicht 5 oder aber zwischen der Innenschicht 4 und der Adsorptionsschicht 5 angeordnet sein. Bevorzugterweise wird die Membran 7 aber zwischen der Außenschicht 3 und der Adsorptionsschicht 5 angeordnet (d. h. also auf der im Tragezustand vom Fuß abgewandten Seite der Adsorptionsschicht 5), so daß gegebenenfalls durch die Außenschicht 3 des Schuhs 1 eingedrungene Gifte bereits von der Membran 7 zurückgehalten werden und folglich die Adsorptionsschicht 5 gar nicht erst erreichen oder allenfalls in nur äußerst geringen Mengen; auf diese Weise wird zum einen die Kapazität der Adsorptionsschicht quasi niemals erschöpft, und zum anderen wird durch die Anwesenheit der Membran 7 ein zusätzlicher Schutz für den Träger des Schuhs 1 bereitgestellt, so daß ein Schuh 1 mit sozusagen doppelter Schutzfunktion gegenüber chemischen Giften resultiert (nämlich einerseits durch die Sperrwirkung der Membran 7 und andererseits durch die Adsorptionswirkung der Adsorptionsschicht 5). Durch die Anwesenheit einer Membran 7 wird zudem erreicht, daß der Schuh 1 dekontaminierbar und regenerierbar wird; denn durch die Außenschicht 3 gegebenenfalls eingedrungene Gifte können durch entsprechende Behandlungsverfahren von der Membran entfernt (z. B. heruntergespült) werden, beispielsweise mit geeigneten Dekontaminationslösungen, die dem Fachmann zu diesem Zwecke bestens bekannt sind.

Des weiteren kann vorgesehen sein, daß zwischen der Innenschicht 4 und der Adsorptionsschicht 5 oder aber zwischen der Innenschicht 4 und der Membran 7 oder aber vorzugsweise zwischen der Adsorptionsschicht 5 und der Membran 7 - je nach Abfolge der Schichten 4, 5 und 7 im Schichtaufbau 2 - außerdem eine Abstandsschicht 8 angeordnet ist, z. B. in Form eines Vlieses (Nonwoven), einer dünnen Schaumstoffschicht oder eines textilen Flächengebildes (z. B. eines Gewirkes). Vorteilhafterweise ist die Abstandsschicht 8 unmittelbar an der Innenschicht 4 angrenzend angeordnet (d. h. auf der im Tragezustand dem Fuß abgewandten Seite der Innenschicht 4). Gemäß einer besonders vorteilhaften Ausführungsform ist die Abstandsschicht 8 zwischen der Adsorptionsschicht 5 und der Membran 7 angeordnet. Die zusätzliche Abstandsschicht 8 hat den Vorteil, daß sie die mechanische Belastung der Adsorptionsschicht 5 bzw. der Membran 7 verringert, weil zwischen der Jenenschicht 4 einerseits und der Adsorptionsschicht 5 bzw, Membran 7 andererseits bzw. zwischen der Adsorptionsschicht 5 und der Membran 7 eine zusätzliche Schicht befindlich ist, welche mechanische Belastungen abfangen bzw. dämpfen kann. Zum anderen verhindert dies, daß Verunreinigungen, die von der Person, welche den Schuh 1 trägt, stammen (wie z. B. Fußschweiß), das Adsorptionsmaterial 6 der Adsorptionsschicht 5 unnötig belasten; auf diese Weise wird somit auch die Effizienz der Adsorptionsschicht 5 erhöht. Zum anderen steigert die zusätzliche Abstandsschicht 8 den Tragekomfort des erfindungsgemäßen Schuhs 1, insbesondere das weiche Tragegefühl.

Im allgemeinen sind die einzelnen Schichten 3, 4, 5, 7 und 8 des Schichtaufbaus 2 jeweils miteinander verbunden; dies geschieht mit an sich für diese Zwecke bekannten Methoden (z. B. durch Verkleben, Verschweißen, Vernähen, Verheften etc.). Vorteilhafterweise erfolgt das Verbinden bzw. Fixieren der einzelnen Schichten 3, 4, 5, 7 und 8 des Schichtaufbaus 2 jeweils miteinander nahtlos, vorzugsweise ohne Beschädigung der einzelnen Schichten 3, 4, 5, 7 und 8 (z. B. durch Verkleben, Verschweißen etc.). Für den Fall, daß die Schichten 3, 4, 5, 7 und 8, zumindest teilweise, vernäht oder dergleichen werden, empfiehlt es sich, die Nahtstellen abzudichten (z. B. mit einem sogenannten Nahtversiegelungsband). Insbesondere bilden die einzelnen Schichten 3, 4, 5, 7 und 8 des Schichtaufbaus 2 einen zusammenhängenden Verbund aus.

Die einzelnen Schichten 3, 4, 5, 7 und 8 bzw. der Schichtaufbau 2 können sich dabei über den gesamten Fuß einschließlich Fußsohle, Fußknöchel und eines Teils der unteren Wade erstrecken. Gemäß dieser Ausführungsform bilden die einzelnen Schichten 3, 4, 5, 7 und 8 bzw. der Schichtaufbau 2 einen zusammenhängenden Stiefel in Fußform mit Schaft ("Bootie"), der im Bereich der Fußsohle mit einer Schuhsohle 9 verbunden bzw. ausgestattet ist (z. B. mit einer Schuhsohle 9 verklebt oder dergleichen ist).

Gemäß einer alternativen Ausführungsform erstrecken sich die einzelnen Schichten 3, 4, 5, 7 und 8 bzw. der Schichtaufbau 2 nicht über den Bereich der Fußsohle, sondern nur über den Bereich des restlichen Fußes, d. h. über den Bereich der Fußvorderseite (Fußrist), des Knöchels und eines Teils der Wade im Fall eines Stiefels; entlang des Bereich der Fußkonturen sind bei dieser Ausführungsform die einzelnen Schichten 3, 4, 5, 7 und 8 bzw. der Schichtaufbau 2 abdichtend mit einer Sohle 9 verbunden. Für den Bereich der Fußsohle kann gemäß dieser Ausführungsform zusätzlich eine Innensohle (z. B. in der Art einer Schuheinlage oder aber integriert in die Schuhsohle selbst) mit einem chemische Gifte adsorbierenden Adsorptionsmaterial, insbesondere Aktivkohle, vorgesehen sein; dies ist aber nicht zwingend erforderlich, weil bereits durch den Schichtaufbau 2 zusammen mit der Schuhsohle 9, die abdichtend miteinander verbunden sind, bereits ein effizienter Schutz gegenüber chemischen Giften, insbesondere chemischen Kampfstoffen, bei gleichzeitig hohem Tragekomfort gewährleistet ist.

Damit chemische Gifte, insbesondere Kampfstoffe, nicht über die Sohle 9 in den Schuh eindringen können, ist die Schuhsohle 9 im allgemeinen aus einem solchen Material gebildet, das gegenüber chemischen Giften, insbesondere Kampfstoffen, zumindest im wesentlichen undurchlässig ist oder aber deren Durchtritt zumindest verzögert. Im allgemeinen ist die Sohle 9 außerdem zumindest im wesentlichen wasser- und/oder luftundurchlässig ausgebildet. Im allgemeinen kann die Sohle 9 zu diesen Zwecken aus einem Kunststoff- bzw. Gummimaterial bestehen, welches dem Fachmann für diese Zwecke bekannt ist. Zur Sicherstellung einer effizienten Schutzfunktion sollte die Schuhsohle 9 abdichtend mit dem Schichtaufbau 2 verbunden sein, insbesondere im Bereich des Übergangs von Schuhsohle 9 und Schichtaufbau 2; dies geschieht in an sich bekannter Weise (z. B. durch Vernähen, Verkleben und/oder Verschweißen etc.). Auf diese Weise wird auch der Bereich der Fußsohle wie auch der restliche Fußbereich ausreichend gegenüber einem Eindringen chemischer Gifte geschützt.

Was die Außenschicht 3 des erfindungsgemäßen Schuhs 1 anbelangt, so kann diese aus einem atmungsaktiven, insbesondere wasserdampfdurchlässigen Material, wie z. B. Leder oder Polyamide (insbesondere Nylon, wie z. B. Cordura^{®} von der Fa. DuPont), gebildet sein; Beispiele hierfür sind dichte und widerstandsfähige PoJyamid- bzw. Nylonflächengebilde, insbesondere Gewebe oder Gewirke auf dieser Basis. Im Fall atmungsaktiver Materialien als Außenschicht 3 empfiehlt sich eine Oleophobierung und/oder Hydrophobierung des Materials der Außenschicht 3, insbesondere durch eine spezielle Imprägnierung, um ein Eindringen chemischer Gifte (z. B. konzentrierte Tropfen von Kampfstoffen) zu verhindern bzw. zu erschweren. Alternativ kann die Außenschicht 3 aber auch aus einem Kunststoffmaterial bestehen, so z. B. aus Butylgummi, Kautschuken (z. B. Chloroprenkautschuken wie Neoprenen oder Fluorkautschuken) oder aber Fluorelastomeren (z. B. Viton^{®} von der Fa. DuPont Dow Elastomers L.L.C.); in diesem Fall kann eine Oleophobierung bzw. Hydrophobierung entfallen, da diese Materialien bereits als solche oleophob und hydrophob sind.

Was das Material für die Innenschicht 4, insbesondere das Schuhinnenfutter, anbelangt, so können hier beliebige Textilmaterialien, vorzugsweise luftdurchlässige Textilmaterialien verwendet werden, so z. B. textile Flächengebilde. Nichtbeschränkende Beispiele sind Gewebe, Gewirke, Gestricke, Gelege, Textilverbundstoffe oder Vliese. Vorzugsweise wird eine Web- oder Wirkware oder ein Vliesstoff als Material für die Innenschicht 4 verwendet.

Was die Adsorptionsschicht 5 anbelangt, so ist diese im allgemeinen diskontinuierlich ausgebildet, d. h. die Adsorptionsschicht 5 umfaßt im allgemeinen diskrete, chemische Gifte adsorbierende Adsorptionspartikel 6 (z. B. auf Basis von Aktivkohle), die beispielsweise mittels eines Klebstoffs 11 auf einem Träger 10 fixiert sein können. Das Adsorptionsmaterial 6 der Adsorptionschicht 5 ist insbesondere ein Aktivkohle enthaltendes oder hieraus bestehendes Adsorptionsmaterial, beispielsweise ein Material auf Basis von Aktivkohle, insbesondere in Form von Aktivkohleteilchen und/oder Aktivkohlefasern.

Die guten Trageeigenschaften des erfindungsgemäßen Schuhs 1 werden bei Verwendung einer Adsorptionsschicht auf Aktivkohlebasis durch die Pufferwirkung der Aktivkohle noch zusätzlich verbessert, weil die Aktivkohle als Feuchtigkeits- bzw. Wasserspeicher oder -puffer (z. B. für Fußschweiß) dient. Bei Verwendung beispielsweise von Aktivkohlekügelchen als Adsorptionsmaterial für die Adsorptionsschicht sind Auflagen von bis zu circa 250 g/m² oder mehr üblich, so daß z. B. bei einem Schweißausbruch etwa 40 g/m² Feuchtigkeit gespeichert werden können, die im Fall einer atmungsaktiven Außenschicht 3 dann wieder nach außen abgegeben werden können.

Im allgemeinen ist die Adsorptionsschicht 5 als ein Adsorptionsflächenfilter ausgebildet. Zu diesem Zweck enthält die Adsorptionsschicht 5 ein chemische Gifte adsorbierendes Adsorptionsmaterial 6, vorzugsweise auf Basis von Aktivkohle, z. B. in Form von Aktivkohleteilchen und/oder Aktivkohlefasern, wobei das Adsorptionsmaterial 6 im allgemeinen an einen Träger 10, insbesondere einem textilen Träger, befestigt ist. Das Adsorptionsmaterial 6 der Adsorptionsschicht 5 ist dabei vorzugsweise auf der im Tragezustand dem Fuß abgewandten Seite des Trägers 10 angeordnet. Grundsätzlich ist es aber auch möglich, den Träger 10 beidseitig mit Adsorptionsmaterial 6 zu beaufschlagen. Im allgemeinen genügt es jedoch, den Träger 10 nur einseitig mit Adsorptionsmaterials 6 zu beaufschlagen. Die Befestigung des Adsorptionsmaterial 6 an den Träger 10 geschieht in an sich üblicher Weise, beispielsweise durch kontinuierlichen oder vorzugsweise diskontinuierlichen Auftrag eines Klebstoffs 11 auf den Träger 10, wobei anschließend das Adsorptionsmaterial 6 an dem Klebstoff 11 fixiert wird. Zur Erhöhung des Tragekomforts, insbesondere zur Vermeidung einer Steifigkeit des Trägers 10 wird ein diskontinuierlicher, insbesondere punktförmiger Klebstoffauftrag bevorzugt, d. h. der Träger ist vorteilhafterweise diskontinuierlich bzw. punktförmig in einem vorzugsweise regelmäßigen Muster bzw. Raster mit dem Adsorptionsmaterial 6 bedruckt. Das eigentliche Adsorptionsmaterial 6 kann in diesem Fall durch ein vorzugsweise luftdurchlässiges Textilmaterial, insbesondere ein textiles Flächengebilde als Abdeckschicht kaschiert werden, um die mechanische Belastung des Adsorptionsmaterials zu verringern (z. B. mit einem Flächengebilde mit einem geringen Flächengewicht von 5 bis 75 g / m², insbesondere 10 bis 50 g / m², vorzugsweise 15 bis 30 g / m²); das Vorsehen einer solchen Abdeck- bzw. Kaschierschicht ist aber rein fakultativ. Für eine effiziente Adsorptionsleistung ist es bevorzugt, wenn mindestens 50 %, insbesondere mindestens 60 %, vorzugsweise mindestens 70 %, besonders bevorzugt mindestens 75 %, ganz besonders bevorzugt mindestens 80 % des Trägers 10 mit Adsorptionsmaterial 6 beaufschlagt sind. Dabei ist zu beachten, daß die Menge und die Art, insbesondere die Viskosität, des Klebstoffs 11 derart ausgelegt sind, daß das Adsorptionsmaterial 6 der Adsorptionsschicht 5 zu mindestens 50 %, insbesondere zu mindestens 60 %, vorzugsweise zu mindestens 70 %, für die zu adsorbierenden chemischen Gifte, insbesondere die chemischen Kampfstoffe, frei zugänglich ist, d. h. nicht vollständig in den Klebstoff 11 eingedrückt ist bzw. einsinkt.

Gemäß einer besonderen, in den Fig. 1 und 2 nicht dargestellten Ausführungsform dient die Membran 7 gleichzeitig als Träger 10 für das Adsorptionsmaterial 6. In diesem Fall kann die Membran 7 beispielsweise mit dem Adsorptionsmaterial 6 bedruckt bzw. beaufschlagt sein, beispielsweise durch Verkleben von Aktivkohleteilchen, vorzugsweise in Korn- oder Kugelform mit der Membran 7 in der zuvor geschilderten Art und Weise. Bei dieser besonderen Ausführungsform empfiehlt es sich, die Membran 7 so anzuordnen, daß sie im Tragezustand vom Fuß abgewandt ist und das Adsorptionsmaterial 6 folglich dem Fuß zugewandt ist, so daß gegebenenfalls durch das Außenschichtmaterial 3 eingedrungene chemische Gifte zunächst auf die Membran 7 treffen, wo sie zurückgehalten werden, so daß keine oder allenfalls nur geringe Mengen der Gifte auf das Adsorptionsmaterial 6 der Adsorptionsschicht 5 treffen können. Wie zuvor geschildert, kann das Adsorptionsmaterial 6 der Adsorptionsschicht 5 beispielsweise aus diskreten Aktivkohleteilchen, vorzugsweise in Kornform ("Kornkohle"), besonders bevorzugt in Kugelform ("Kugelkohle"), bestehen. In diesem Fall beträgt der mittlere Durchmesser der Aktivkohleteilchen weniger als 1,0 mm, vorzugsweise weniger als 0,8 mm, bevorzugt weniger als 0,6 mm, beträgt jedoch im allgemeinen mindestens 0,1 mm. Bei dieser Ausführungsform werden die Aktivkohleteilchen im allgemeinen in einer Menge von 5 bis 500 g / m², insbesondere 10 bis 400 g / m², vorzugsweise 20 bis 300 g / m², bevorzugt 25 bis 250 g / m², besonders bevorzugt 50 bis 150 g/m², ganz besonderes bevorzugt 50 bis 100 g / m², auf dem Trägermaterial 10 aufgebracht. Geeignete Aktivkohleteilchen weisen innere Oberflächen (BET) von mindestens 800 m² / g, insbesondere von mindestens 900 m² / g, vorzugsweise von mindestens 1.000 m²/g, bevorzugt im Bereich von 800 bis 1.500 m²/ g, auf. Kornkohle, insbesondere Kugelkohle, hat den entscheidenden Vorteil, daß sie enorm abriebfest und sehr hart ist, was in bezug auf die Verschleißeigenschaften von großer Bedeutung ist. Bevorzugterweise beträgt der Berstdruck für ein einzelnes Aktivkohleteilchen, insbesondere Aktivkohlekörnchen bzw. -kügelchen, im allgemeinen mindestens etwa 5 Newton, insbesondere mindestens etwa 10 Newton, und kann bis zu etwa 20 Newton erreichen.

Gemäß einer alternativen Ausführungsform kann die Adsorptionsschicht 5 als Adsorptionsmaterial 6 Aktivkohlefasern, insbesondere in Form von Aktivkohleflächengebilden, umfassen. Derartige Aktivkohleflächengebilde können beispielsweise ein Flächengewicht von 20 bis 200 g / m², insbesondere 30 bis 150 g / m², vorzugsweise 50 bis 120 g /m², aufweisen. Bei diesen Aktivkohleflächengebilden kann es sich beispielsweise um Aktivkohlegewebe, -gewirke, -gelege oder -verbundstoffe handeln (z. B. auf Basis von carbonisierter und aktivierter Cellulose und/oder carbonisierten und aktivierten Acrylnitrilen).

Gleichermaßen ist es auch möglich, als Adsorptionsmaterial 6 der Adsorptionsschicht 5 Aktivkohleteilchen und Aktivkohlefasern miteinander zu kombinieren. Aktivkohleteilchen haben den Vorteil einer höheren Adsorptionskapazität, während Aktivkohlefasern eine bessere Adsorptionskinetik aufweisen.

Zur Erhöhung der Adsorptionseffizienz bzw. Adsorptionsleistung besteht die Möglichkeit, das Adsorptionsmaterial 6 der Adsorptionsschicht 5, insbesondere die Aktivkohleteilchen und/oder Aktivkohlefasern, außerdem mit mindestens einem Katalysator zu imprägnieren. Erfindungsgemäß geeignete Katalysatoren sind beispielsweise Enzyme und/oder Metallionen, vorzugsweise Kupfer-, Silber-, Cadmium-, Platin-, Palladium-, Zink- und/oder Quecksilberionen. Die Menge an Katalysator kann in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht der Adsorptionsschicht 5.

Was die Membran 7 anbelangt, so kann es sich hierbei um eine kontinuierliche, insbesondere geschlossene Membran handeln. Die Dicke der Membran 7 kann in weiten Bereichen variieren; im allgemeinen liegt sie im Bereich von 1 bis 500 µm, insbesondere 1 bis 250 µm, vorzugsweise 1 bis 100 µm, bevorzugt 1 bis 50 µm, besonders bevorzugt 2,5 bis 30 µm, ganz besonders bevorzugt 5 bis 25 µm. Zur Steigerung des Tragekomforts ist die Membran 7 wasserdampfdurchlässig; insbesondere sollte die Membran 7 bei 25 °C und bei einer Dicke von 50 µm eine Wasserdampfdurchlässigkeit von mindestens 12,5 1 /m² pro 24 h, insbesondere mindestens 17,5 1 /m² pro 24 h, vorzugsweise mindestens 20 1 / m² pro 24 h oder sogar mehr aufweisen (gemessen nach der "Methode des umgekehrten Bechers" bzw. "inverted cup method" nach ASTM E 96 und bei 25 °C) (Zu weiteren Einzelheiten zur Messung der Wasserdampfdurchlässigkeit [water vapour transmission, WVT] vgl. auch McCullough et al. "A comparison of standard methods for measuring water vapour permeability of fabrics" in Meas. Sci. Technol. [Measurements Science and Technology] 14, 1402-1408, August 2003*).* Hierdurch wird ein besonders hoher Tragekomfort gewährleistet.

Die Membran 7 sollte zu diesen Zwecken einen Wasserdampfdurchgangswiderstand Rₑₜ unter stationären Bedingungen - gemessen nach DIN EN 31 092:1993 vom Februar 1994 ("Textilien - Physiologische Wirkungen, Messung des Wärme- und Wasserdampfdurchgangswiderstandes unter stationären Bedingungen (sweating guarded-hotplate test)") bzw. nach gleichlautender internationaler Norm ISO 11 092 - bei 35 °C von höchstens 25 (m² . Pascal) / Watt, insbesondere höchstens 20 (m². Pascal) / Watt, vorzugsweise höchstens 13 (m². Pascal) / Watt, bei einer Dicke von 50 µm aufweisen.

Die Membran 7 sollte nur allenfalls quellfähig bzw. wasseraufnahmefähig sein; insbesondere sollte die Quellfähigkeit und/ oder das Wasseraufnahmevermögen der Membran 7 höchstens 35 %, insbesondere höchstens 25 %, bezogen auf das Eigengewicht der Membran 7, betragen. Erfindungsgemäß geeignete Membranen 7 sind gegenüber Flüssigkeiten, insbesondere Wasser und/oder gegenüber Aerosolen zumindest im wesentlichen undurchlässig oder verzögern zumindest deren Durchtritt. Zur Erreichung einer allenfalls geringfügigen Quellfähigkeit sollte die Membran 7 keine oder im wesentlichen keine stark hydrophilen Gruppen, insbesondere keine Hydroxylgruppen aufweisen. Zu Zwecken einer geringfügigen Quellung kann die Membran 7 aber schwach hydrophile Gruppen, insbesondere Polyethergruppen, aufweisen.

Die Membran 7 kann aus einem Kunststoff bzw. Polymermaterial bestehen oder ein solches umfassen. Ein solcher Kunststoff bzw. ein solches Polymer kann beispielsweise ausgewählt sein aus der Gruppe von Polyurethanen, Polyetheramiden, Polyesteramiden, Polytetrafluorethylenen und/oder Polymeren auf Cellulosebasis und/oder Derivaten der vorgenannten Verbindungen. Beispielsweise kann die Membran 7 als Reaktionsprodukt aus der Reaktion eines Isocyanats, insbesondere eines maskierten oder blockierten Isocyanats, mit einem isocyanatreaktiven Vernetzer erhalten sein. So kann die Membran 7 beispielsweise eine polyurethanbasierte Membran sein.

Gemäß einer besonderen Ausführungsform kann die Membran 7 als ein mehrschichtiges Laminat bzw. als ein mehrschichtiger Verbund ausgebildet sein. Dieses Laminat bzw. dieser Verbund kann aus mindestens zwei, vorzugsweise mindestens drei miteinander verbundenen Schichten oder Lagen bestehen. Beispielsweise kann dieses Laminat bzw. dieser Verbund eine Kernschicht auf Basis eines Polymers auf Cellulosegrundlage und zwei mit der Kernschicht verbundene äußere Schichten, insbesondere auf Basis eines Polyurethans, eines Polyetheramids und/oder eines Polyesteramids, umfassen. Dabei kann die Kernschicht auf Basis eines Polymers auf Cellulosegrundlage als 1 bis 100 µm, insbesondere 5 bis 50 µm, vorzugsweise 10 bis 20 µm dicke Membran ausgebildet sein und die zwei mit der Kernschicht verbundenen äußeren Schichten jeweils als 1 bis 100 µm, insbesondere 5 bis 50 µm, vorzugsweise 5 bis 20 µm dicke Membran ausgebildet sein. Diese besondere Ausgestaltung der Membran 7 ermöglicht es, Sperrschichtmaterialien mit jeweils unterschiedlichen Eigenschaften, insbesondere unterschiedlichen Wasserdampfdurchlässigkeiten und Barrierewirkungen gegenüber chemischen Giften, miteinander zu kombinieren und so eine Optimierung der Eigenschaften der Membran 7 zu erreichen. Beispielsweise sind Cellulose und Cellulosederivate ausgezeichnete Sperrschichtmaterialien insbesondere gegenüber chemischen Schad- bzw. Giftstoffen, wie z. B. Kampfstoffen (Lost etc.), und werden von diesen Materialien nicht angegriffen bzw. aufgelöst, und zum anderen verhindern polyurethanbasierte Materialien eine Migration bzw. Diffusion der in der Celluloseschicht gegebenenfalls vorhandenen Weichmacher und dämpfen außerdem das durch die cellulosebasierte Kemschicht bedingte, beim Tragen auftretende Knistern. Deswegen ist es gemäß dieser besonderen Ausführungsform bevorzugt, daß im Fall eines Membranlaminats oder -verbunds die Kernschicht auf Basis eines Polymers auf Cellulosegrundlage gebildet wird, während die beiden Außenschichten der Membran 7 durch Polyurethanmembranen gebildet werden.

Um die Stabilität der Membran 7 zu erhöhen, ist es vorteilhaft, die Membran 7 auf einer in den Figuren nicht dargestellten flächigen Trägerschicht anzuordnen (z. B. auf einem vorzugsweise luftdurchlässigen Textilmaterial, wie z. B. einem textilen Flächengebilde, z. B. einem Gewebe, Gewirke, Gestricke, Gelege oder Textilverbundstoff). Zu diesen Zwecken kann die Membran 7 auf die Trägerschicht auflaminiert oder aufkaschiert sein, insbesondere mittels eines vorzugsweise punktförmig aufgetragenen Klebstoffes. Die flächige Trägerschicht für die Membran 7 sollte in diesem Fall ein geringes Flächengewicht von weniger als 150 g /m², insbesondere weniger als 100 g / m², vorzugsweise weniger als 40 g / m², aufweisen. Die flächige Trägerschicht für die Membran 7 wirkt quasi als Stützschicht und erhöht die mechanische Stabilität und Reißfestigkeit der Membran 7, was insbesondere dann von Bedeutung ist, wenn die Membran 7 gleichzeitig als Träger 10 für das Adsorptionsmaterial 6 dient.

Zur Erhöhung der des Tragekomforts einerseits und zur Erzielung einer guten Verschleißbeständigkeit andererseits ist es vorteilhaft, wenn die Membran 7 eine gewisse Elastizität aufweist. Insbesondere ist es vorteilhaft, wenn die Membran 7 zu mindestens 10 %, insbesondere zu mindestens 20 %, vorzugsweise zu mindestens 30 %, zumindest in eine Richtung gedehnt bzw. gestreckt werden kann. Auch der Schichtaufbau 2 insgesamt sollte zu den vorgenannten Zwecken neben einer guten Biegsamkeit auch eine gewisse Elastizität aufweisen; verglichen mit der Membran 7, ist die Elastizität des Schichtaufbaus 2 als Ganzes geringer, und im allgemeinen ist der Schichtaufbau 2 insgesamt zu mindestens 5 %, vorzugsweise zu mindestens 10 %, zumindest in eine Richtung dehnbar bzw. streckbar.

Gemäß einer besonderen, in den Fig. 1 und 2 nicht dargestellten Ausführungsform kann die Membran 7 gleichzeitig die Klebstoffschicht 11 zur Befestigung des Adsorptionsmaterials 6 an den Träger 10 darstellen. In diesem Fall muß die Membran 7 als kontinuierlich Schicht aufgetragen sein und Hafteigenschaften zur Fixierung des Adsorptionsmaterials 6 an den Träger 10 aufweisen; bei dieser besonderen Ausführungsform empfiehlt es sich, die Membran 7, die gleichzeitig Klebstoffschicht 11 ist, auf der im Tragezustand dem Fuß abgewandten Seite und das Adsorptionsmaterial 6 auf der im Tragezustand dem Fuß zugewandten Seite anzuordnen. Bei einer ganz besonderen Ausgestaltung dieser besonderen Ausführungsform kann der Träger 10 gänzlich entfallen, sofern die Membran 7 allein ausreichende Stabilität besitzt, um selbsttragend zu sein, d. h. die Membran 7 dient in diesem Fall gleichzeitig sowohl als Träger 10 wie auch als Klebstoffschicht 11 für das Adsorptionsmaterial 6 und ist somit Bestandteil der Adsorptionsschicht 5.

Der erfindungsgemäße Schuh bietet einen effizienten Schutz gegenüber chemischen Giften, insbesondere chemischen Kampfstoffen, bei gleichzeitig hohem Tragekomfort. Der entscheidende Vorteil des Schuhs nach der vorliegenden Erfindung besteht darin, daß die Schutzfunktion gegenüber chemischen Giften in den Schuh selbst integriert ist und kein zusätzlicher Ausrüstungsgegenstand (z. B. Überschuh, Socke etc.) erforderlich ist. Dadurch werden - im Vergleich zu den zuvor geschilderten Methoden des Standes der Technik - nicht nur eine beträchtliche Gewichtseinsparung und ein erhöhter Tragekomfort erreicht, sondern es wird zudem die Möglichkeit einer effizienten abdichtenden Verbindung des Übergangs zu einem ABC-Schutzanzug eröffnet, so daß chemische Gifte, z. B. Kampfstoffe, den Übergang von Schuhwerk/ Schutzanzug nicht bzw. nicht ohne weiteres passieren können. Aufgrund dieser Eigenschaften eignet sich der Schuh nach der vorliegenden Erfindung insbesondere für den militärischen Einsatz oder den ABC-Einsatz (z. B. in der Form eines Militärstiefels oder ABC-Schutzstiefels).

Infolge der hohen Effizienz der Schutzfunktion der Adsorptionsschicht, die durch die Verwendung einer Membran erhöht, wird, lassen sich auch atmungsaktive Schuhaußenmaterialen, wie z. B. Leder, einsetzen, so daß sich auf diese Weise der Tragekomfort noch erhöhen läßt, ohne daß der Träger des Schuhs einer erhöhten Gefährdung durch die Verwendung eines atmungsaktiven Schuhaußenmaterials ausgesetzt ist.

Aufgrund der guten Biegsamkeit der einzelnen Schichten des erfindungsgemäßen Schuhs bzw. des Schichtaufbaus insgesamt wird nicht nur ein guter Tragekomfort erreicht, sondern außerdem auch eine gute Verschleißbeständigkeit des erfindungsgemäßen Schuhs.

Durch die erfindungsgemäße Ausgestaltung des Schuhs nach der vorliegenden Erfindung wird eine ausgezeichnete Barrierewirkung gegenüber chemischen Kampfstoffen erreicht. Die Barrierewirkung gegenüber chemischen Kampfstoffen, insbesondere Bis-[2-chlorethyl]sulfid (synonym auch als Senfgas, Lost oder Gelbkreuz bezeichnet), gemessen nach CRDEC-SP-84010, Methode 2,2, beträgt höchstens 4 µg/cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h.

Die Herstellung des erfindungsgemäßen Schuhs kann in an sich bekannter Weise erfolgen. Dies ist dem mit der Herstellung von Schuhwerk befaßten Fachmann bestens bekannt, so daß es diesbezüglich keiner weitergehenden Ausführungen bedarf.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Schuh (1), insbesondere Stiefel, mit Schutzfunktion gegenüber chemischen Giften, insbesondere chemischen Kampfstoffen, mit mehrschichtigern Schichtaufbau (2), aufweisend eine im Tragezustand vom Fuß abgewandte Außenschicht (3) und eine der Außenschicht (3) zugeordnete, im Tragezustand dem Fuß zugewandte Innenschicht (4), insbesondere ein Schuhinnenfutter, wobei zwischen der Außenschicht (3) und der Innenschicht (4) eine Adsorptionsschicht (5) mit einem chemische Gifte adsorbierenden Adsorptionsmaterial (6), insbesondere Aktivkohle, angeordnet ist,
**dadurch gekennzeichnet,**
**daß** der Schuh (1) zusätzlich mindestens eine gegenüber chemischen Giften, insbesondere chemischen Kampfstoffen, zumindest im wesentlichen undurchlässige oder aber deren Durchtritt zumindest verzögernde Membran (7) aufweist, wobei die Membran (7) zumindest im wesentlichen wasser- und luftundurchlässig, aber wasserdampfdurchlässig ausgebildet ist und wobei die Membran (7) zwischen der Außenschicht (3) und der Adsorptionsschicht (5) oder zwischen der Innenschicht (4) und der Adsorptionsschicht (5) angeordnet ist.

2. Schuh nach Anspruch 1, **dadurch gekennzeichnet, daß** die Membran (7) zwischen der Außenschicht (3) und der Adsorptionsschicht (5) angeordnet ist,

3. Schuh nach einem oder mehreren der vorangehenden Ansprüche, **dadurch gekennzeichnet, daß** zwischen der Innenschicht (4) und der Adsorptionsschicht (5) oder aber zwischen der Innenschicht (4) und der Membran (7) oder aber vorzugsweise zwischen der Adsorptionsschicht (5) und der Membran (7) außerdem eine Abstandsschicht (8), vorzugsweise in Form eines Vlieses, einer Schaumstoffschicht oder eines textilen Flächengebildes, insbesondere Gewirkes, angeordnet ist.

4. Schuh nach einem oder mehreren der vorangehenden Ansprüche, **dadurch gekennzeichnet, daß** die einzelnen Schichten (3, 4, 5, 7, 8) des Schichtaufbaus (2) jeweils miteinander verbunden sind.

5. Schuh nach einem oder mehreren der vorangehenden Ansprüche, **dadurch gekennzeichnet, daß** der Schuh (1) mit einer zumindest im wesentlichen wasser- und luftundurchlässigen Sohle (9), die gegenüber chemischen Giften, insbesondere chemischen Kampfstoffen, zumindest im wesentlichen undurchlässig ist oder aber deren Durchtritt zumindest verzögert, ausgestattet ist.

6. Schuh nach einem oder mehreren der vorangehenden Ansprüche, **dadurch gekennzeichnet, daß** die Außenschicht (3) aus einem atmungsaktiven, insbesondere wasserdampfdurchlässigen Material, insbesondere einem Leder oder Polyamiden wie Nylon, gebildet ist oder daß die Außenschicht (3) aus einem Kunststoffmaterial, vorzugsweise Butylgummi, Kautschuken, insbesondere Chloroprenkautschuken wie Neoprenen oder Fluorkautschuken, oder Fluorelastomeren, gebildet ist.

7. Schuh nach einem oder mehreren der vorangehenden Ansprüche, **dadurch gekennzeichnet, daß** die Außenschicht (3) oleophobiert und/oder hydrophobiert ist, insbesondere durch eine spezielle Imprägnierung.

8. Schuh nach einem oder mehreren der vorangehenden Ansprüche, **dadurch gekennzeichnet, daß** die Innenschicht (4), insbesondere das Schuhinnenfutter, als ein Textilmaterial, vorzugsweise ein luftdurchlässiges Textilmaterial, insbesondere ein textiles Flächengebilde, ausgebildet ist,

9. Schuh nach einem oder mehreren der vorangehenden Ansprüche, **dadurch gekennzeichnet, daß** die Adsorptionsschicht (5) diskontinuierlich ausgebildet ist.

10. Schuh nach einem oder mehreren der vorangehenden Ansprüche, **dadurch gekennzeichnet, daß** die Adsorptionsschicht (5) diskrete, chemische Gifte adsorbierende Adsorptionspartikel, insbesondere auf Basis von Aktivkohle, umfaßt.

11. Schuh nach einem oder mehreren der vorangehenden Ansprüche, **dadurch gekennzeichnet, daß** das Adsorptionsmaterial (6) der Adsorptionsschicht (5) ein Aktivkohle enthaltendes oder hieraus bestehendes Adsorptionsmaterial ist, vorzugsweise ein Material auf Basis von Aktivkohle, insbesondere in Form von Aktivkohleteilchen und/oder Aktivkohlefasern.

12. Schuh nach einem oder mehreren der vorangehenden Ansprüche, **dadurch gekennzeichnet, daß** die Adsorptionsschicht (5) als ein Adsorptionsflächenfilter ausgebildet ist und daß die Adsorptionsschicht (5) ein chemische Gifte adsorbierendes Adsorptionsmaterial (6), insbesondere auf Basis von Aktivkohle, vorzugsweise in Form von Aktivkohleteilchen und/oder Aktivkohlefasern, umfaßt, wobei das Adsorptionsmaterial (6) vorzugsweise an einem Träger (10), insbesondere einem textilen Träger, befestigt ist.

13. Schuh nach Anspruch 12, **dadurch gekennzeichnet, daß** das Adsorptionsmaterial (6) der Adsorptionsschicht (5) auf der im Tragezustand dem Fuß abgewandten Seite des Trägers (10) angeordnet ist.

14. Schuh nach einem oder mehreren der vorangehenden Ansprüche, **dadurch gekennzeichnet, daß** die Adsorptionsschicht (5) als Adsorptionsmaterial (6) diskrete Aktivkohleteilchen, vorzugsweise in Kornform oder Kugelform, umfaßt.

15. Schuh nach Anspruch 14, **dadurch gekennzeichnet, daß** der mittlere Durchmesser der Aktivkohleteilchen insbesondere < 1,0 mm, vorzugsweise < 0,8 mm, bevorzugt < 0,6 mm ist und/oder der mittlere Durchmesser der Aktivkohleteilchen mindestens 0, 1 mm beträgt.

16. Schuh nach Anspruch 14 oder 15, **dadurch gekennzeichnet, daß** die Aktivkohleteilchen in einer Menge von 5 bis 500 g/m², insbesondere 10 bis 400 g/m², vorzugsweise 20 bis 300 g/m², bevorzugt 25 bis 250 g/m², besonders bevorzugt 50 bis 150 g / m², ganz besonders bevorzugt 50 bis 100 g / m², auf einem Träger (10) aufgebracht sind.

17. Schuh nach einem oder mehreren der Ansprüche 14 bis 16, **dadurch gekennzeichnet, daß** die Aktivkohleteilchen eine innere Oberfläche (BET) von mindestens 800 m²/g, insbesondere von mindestens 900 m²/g, vorzugsweise von mindestens 1.000 m²/g, bevorzugt im Bereich von 800 bis 1.500 m²/g, aufweisen.

18. Schuh nach einem oder mehreren der Ansprüche 14 bis 17, **dadurch gekennzeichnet, daß** die Aktivkohleteilchen einen Berstdruck je einzelnes Aktivkohleteilchen, insbesondere Aktivkohlekörnchen bzw. -kügelchen, von mindestens 5 Newton, insbesondere mindestens 10 Newton, und/oder bis zu 20 Newton aufweisen.

19. Schuh nach einem oder mehreren der vorangehenden Ansprüche, **dadurch gekennzeichnet, daß** die Adsorptionsschicht (5) als Adsorptionsmaterial (6) Aktivkohlefasern, insbesondere in Form eines Aktivkohleflächengebildes, umfaßt.

20. Schuh nach Anspruch 19, **dadurch gekennzeichnet, daß** das Aktivkohleflächengebilde ein Flächengewicht von 20 bis 200 g/m², insbesondere 30 bis 150 g/m², vorzugsweise 50 bis 120 g/m², aufweist und daß das Aktivkohleflächengebilde ein Aktivkohlegewebe, -gewirke, -gelege oder -verbundstoff, insbesondere auf Basis von carbonisierter und aktivierter Cellulose oder eines carbonisierten und aktivierten Acrylnitrils, ist.

21. Schuh nach einem oder mehreren der vorangehenden Ansprüche, **dadurch gekennzeichnet, daß** das Adsorptionsmaterial (6) der Adsorptionsschicht (5) außerdem mit mindestens einem Katalysator imprägniert ist.

22. Schuh nach Anspruch 21, **dadurch gekennzeichnet, daß** als Katalysator Enzyme und/oder Metallionen, vorzugsweise Kupfer-, Silber-, Cadmium-, Platin-, Palladium-, Zink- und/oder Quecksilberionen, verwendet sind.

23. Schuh nach Anspruch 21 oder 22, **dadurch gekennzeichnet, daß** die Menge an Katalysator 0,05 bis 12 Gew.-%, vorzugsweise 1 bis 10 Gew.-%, besonders bevorzugt 2 bis 8 Gew.-%, bezogen auf das Gewicht der Adsorptionsschicht (5), beträgt.

24. Schuh nach einem oder mehreren der vorangehenden Ansprüche, **dadurch gekennzeichnet, daß** das Adsorptionsmaterial (6) der Adsorptionsschicht (5) zu mindestens 50 %, insbesondere zu mindestens 60 %, vorzugsweise zu mindestens 70 %, für die zu adsorbierenden chemischen Gifte, insbesondere chemischen Kampfstoffe, frei zugänglich ist.

25. Schuh nach einem oder mehreren der vorangehenden Ansprüche, **dadurch gekennzeichnet, daß** die Membran (7) eine kontinuierliche, insbesondere geschlossene Membran ist.

26. Schuh nach einem oder mehreren der vorangehenden Ansprüche, **dadurch gekennzeichnet, daß** die Dicke der Membran (7) 1 bis 500 µm, insbesondere 1 bis 250 µm, vorzugsweise 1 bis 100 µm, bevorzugt 1 bis 50 µm, besonders bevorzugt von 2,5 bis 30 µm, ganz besonders bevorzugt 5 bis 25 µm, beträgt.

27. Schuh nach einem oder mehreren der vorangehenden Ansprüche, **dadurch gekennzeichnet, daß** die Membran (7) bei 25 °C und bei einer Dicke von 50 µm eine Wasserdampfdurchlässigkeit von mindestens 12,5 l/m² pro 24 h, insbesondere mindestens 17,5 l/m² pro 24 h, vorzugsweise mindestens 20 1/ m² pro 24 h oder mehr, aufweist.

28. Schuh nach einem oder mehreren der vorangehenden Ansprüche, **dadurch gekennzeichnet, daß** die Membran (7) einen Wasserdampfdurchgangswiderstand Rₑₜ unter stationären Bedingungen, gemessen nach DIN EN 31 092:1993 (Februar 1994) und internationaler Norm ISO 11 092, bei 35 °C von höchstens 25 (m². Pascal) / Watt, insbesondere höchstens 20 (m² · Pascal) / Watt, vorzugsweise höchstens 13 (m² · Pascal) / Watt, bei einer Dicke von 50 µm aufweist.

29. Schuh nach einem oder mehreren der vorangehenden Ansprüche, **dadurch gekennzeichnet, daß** die Membran (7) allenfalls nur geringfügig quellfähig oder nur geringfügig wasseraufnahmefähig ist, insbesondere wobei die Quellfähigkeit oder das Wasseraufnahmevermögen der Membran (7) höchstens 35 %, insbesondere höchstens 25 %, bezogen auf das Eigengewicht der Membran (7), beträgt.

30. Schuh nach einem oder mehreren der vorangehenden Ansprüche, **dadurch gekennzeichnet, daß** die Membran (7) gegenüber Flüssigkeiten, insbesondere Wasser, und gegenüber Aerosolen zumindest im wesentlichen undurchlässig ist oder zumindest deren Durchtritt verzögert.

31. Schuh nach einem oder mehreren der vorangehenden Ansprüche, **dadurch gekennzeichnet, daß** die Membran (7) keine oder im wesentlichen keine stark hydrophilen Gruppen, insbesondere keine Hydroxylgruppen, aufweist und/oder daß die Membran (7) schwach hydrophile Gruppen, insbesondere Polyethergruppen, aufweist.

32. Schuh nach einem oder mehreren der vorangehenden Ansprüche, **dadurch gekennzeichnet, daß** die Membran (7) einen Kunststoff oder ein Polymer umfaßt und/oder hieraus besteht, insbesondere wobei der Kunststoff und/oder das Polymer aus der Gruppe von Polyurethanen, Polyetheramiden, Polyesteramiden, Polytetrafluorethylenen und/oder Polymeren auf Cellulosebasis und/oder Derivaten der vorgenannten Verbindungen ausgewählt sein kann.

33. Schuh nach einem oder mehreren der vorangehenden Ansprüche, **dadurch gekennzeichnet, daß** die Membran (7) als Reaktionsprodukt aus der Reaktion eines Isocyanats, insbesondere eines maskierten oder blockierten Isocyanats, mit einem isocyanatreaktiven Vernetzer erhalten ist und/oder daß die Membran (7) eine polyurethanbasierte Membran ist.

34. Schuh nach einem oder mehreren der vorangehenden Ansprüche, **dadurch gekennzeichnet, daß** die Membran (7) als ein mehrschichtiges Laminat und/oder als ein mehrschichtiger Verbund ausgebildet ist, insbesondere wobei das Laminat und/oder der Verbund aus mindestens zwei, vorzugsweise mindestens drei miteinander verbundenen Schichten oder Lagen besteht.

35. Schuh nach Anspruch 34, **dadurch gekennzeichnet, daß** das Laminat oder der Verbund eine Kernschicht auf Basis eines Polymers auf Cellulosegrundlage und zwei mit der Kernschicht verbundene äußere Schichten, insbesondere auf Basis eines Polyurethans, eines Polyetheramids und/oder eines Polyesteramids, umfaßt, insbesondere wobei die Kernschicht auf Basis eines Polymers auf Cellulosegrundlage als 1 bis 100 µm, insbesondere 5 bis 50 µm, vorzugsweise 10 bis 20 µm dicke Membran ausgebildet sein kann und/oder insbesondere wobei die zwei mit der Kernschicht verbundenen äußeren Schichten jeweils als 1 bis 100 µm, insbesondere 5 bis 50 µm, vorzugsweise 5 bis 20 µm dicke Membran ausgebildet sein können.

36. Schuh nach einem oder mehreren der vorangehenden Ansprüche, **dadurch gekennzeichnet, daß** die Membran (7) auf einer vorzugsweise flächigen Trägerschicht angeordnet ist.

37. Schuh nach einem oder mehreren der vorangehenden Ansprüche, **dadurch gekennzeichnet, daß** die Membran (7) gleichzeitig die Klebstoffschicht (11) zur Befestigung des Adsorptionsmaterials (6) an den Träger (10) darstellt oder daß die Membran (7) gleichzeitig sowohl als Träger (10) wie auch als KlebstoffSchicht (11) für das Adsorptionsmaterial (6) dient.

38. Schuh nach einem oder mehreren der vorangehenden Ansprüche, **dadurch gekennzeichnet, daß** der Schuh (1) eine Barrierewirkung gegenüber chemischen Kampfstoffen, insbesondere Bis[2-chlorethyl]sulfid (Senfgas, Lost, Gelbkreuz), gemessen nach CRDEC-SP-84010, Methode 2.2, von höchstens 4 µg/cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h, aufweist.

## Claims

1. Footwear (1), especially a boot, with a protective function against toxic chemical agents, especially chemical warfare agents, with multilayered layer construction (2), having an outer layer (3), distal from the foot in the wear state and an inner layer (4), especially a lining, proximal to the foot in the wear state and assigned to the outer layer (3), an adsorption layer (5) disposed between the outer layer (3) and the inner layer (4) and comprising an adsorbent material (6), especially activated carbon, for adsorbing toxic chemical agents,
**characterized in that**
the footwear (1) further comprises at least one membrane (7) which is at least essentially impermeable to toxic chemical agents, especially chemical warfare agents, or at least retards their passage, the membrane (7) being at least essentially water and air impermeable but water vapour permeable and being disposed between the outer layer (3) and the adsorption layer (5) or between the inner layer (4) and the adsorption layer (5).

2. Footwear according to Claim 1, **characterized in that** the membrane (7) is disposed between the outer layer (3) and the absorption layer (5).

3. Footwear according to one or more of the preceding claims, **characterized in that** a spacing layer (8), preferably in the form of a nonwoven, a foam layer or a textile fabric, in particular a loop-formingly knitted fabric, is disposed between the inner layer (4) and the adsorption layer (5) or alternatively between the inner layer (4) and the membrane (7) or alternatively preferably between the adsorption layer (5) and the membrane (7).

4. Footwear according to one or more of the preceding claims, **characterized in that** the individual layers (3, 4, 5, 7, 8) the layer construction (2) are each joined to one another.

5. Footwear according to one or more of the preceding claims, **characterized in that** the footwear (1) is equipped with an at least essentially water and air impermeable sole (9) which is at leastessentially impermeable to toxic chemical agents, especially chemical warfare agents, or at least retards their passage.

6. Footwear according to one or more of the preceding claims, **characterized in that** the outer layer (3) comprises a breathable, especially a water vapour permeable, material, especially a leather or polyamides such as nylon, or **in that** the outer layer (3) comprises a plastics material, preferably butylrubber, rubbers, especially chloroprene rubbers such as neoprenes or fluororubbers, or fluoroelastomers.

7. Footwear according to one or more of the preceding claims, **characterized in that** the outer layer (3) is oleophobic and/or hydrophobic, especially through a specific impregnation.

8. Footwear according to one or more of the preceding claims, **characterized in that** the inner layer (4), especially the lining, comprises a textile material, preferably an air permeable textile material, in particular a textile fabric.

9. Footwear according to one or more of the preceding claims, **characterized in that** the absorption layer (5) is discontinuous.

10. Footwear according to one or more of the preceding claims, **characterized in that** the absorption layer (5) comprises discrete adsorbent particles, especially based on activated carbon, for toxic chemical agents.

11. Footwear according to one or more of the preceding claims, **characterized in that** the adsorbent material (6) of the adsorption layer (5) is an adsorbent material containing or consisting of activated carbon, preferably a material based on activated carbon, in particular in the form of activated carbon particles and/or activated carbon fibres.

12. Footwear according to one or more of the preceding claims, **characterized in that** the adsorption layer (5) comprises an adsorption surface filter and **in that** the adsorption layer (5) comprises an adsorbent material (6) for toxic chemical agents, especially based on activated carbon, preferably in the form of activated carbon particles and/or activated carbon fibres, the adsorbent material (6) preferably being secured to a support (10), especially to a textile support.

13. Footwear according to Claim 12, **characterized in that** the adsorbent material (6) of the adsorption layer (5) is disposed on that side of the support (10) which is distal from the foot in the wear state.

14. Footwear according to one or more of the preceding claims, **characterized in that** the adsorption layer (5) comprises discrete activated carbon particles, preferably in granule form or spherical form, as adsorbent material (6).

15. Footwear according to Claim 14, **characterized in that** the mean diameter of the activated carbon particles is especially < 1.0 mm, preferably < 0.8 mm, more preferably < 0.6 mm, and/or the mean diameter of the activated carbon particles is at least 0.1 mm.

16. Footwear according to Claim 14 or 15, **characterized in that** the activated carbon particles have been applied to a support (10) in an amount of 5 to 500 g/m², especially 10 to 400 g/m², preferably 20 to 300 g/m², more preferably 25 to 250 g/m², even more preferably 50 to 150 g/m², most preferably 50 to 100 g/m².

17. Footwear according to one or more of Claims 14 to 16, **characterized in that** the activated carbon particles have an internal specific surface area (BET) of at least 800 m²/g, especially of at least 900 m²/g, preferably of at least 1000 m²/g or more preferably in the range from 800 to 1500 m²/g.

18. Footwear according to one or more of Claims 14 to 17, **characterized in that** the activated carbon particles have a bursting pressure per individual activated carbon particle, in particular activated carbon granule or spherule, of at least 5 newtons, especially at least 10 newtons, and/or up to 20 newtons.

19. Footwear according to one or more of the preceding claims, **characterized in that** the adsorption layer (5) comprises activated carbon fibres, in the particular in the form of an activated carbon fabric, as adsorbent material (6).

20. Footwear according to Claim 19, **characterized in that** the activated carbon fabric has a basis weight of 20 to 200 g/m², especially 30 to 150 g/m² and preferably 50 to 120 g/m², and **in that** the activated carbon fabric is a woven, loop-formingly knitted, laid or bonded fabric of activated carbon, especially based on carbonized and activated cellulose or carbonized and activated acrylonitrile.

21. Footwear according to one or more of the preceding claims, **characterized in that** the adsorbent material (6) of the adsorption layer (5) is also impregnated with at least one catalyst.

22. Footwear according to Claim 20, **characterized in that** enzymes and/or metal ions, preferably ions of copper, of silver, of cadmium, of platinum, of palladium, of zinc and/or of mercury, are used as catalyst.

23. Footwear according to Claim 21 or 22, **characterized in that** the amount of catalyst is 0.05 to 12 wt.%, preferably 1 to 10 wt.%, more preferably 2 to 8 wt.%, based on the weight of the adsorption layer (5).

24. Footwear according to one or more of the preceding claims, **characterized in that** the adsorbent material (6) of the adsorption layer (5) is at least 50%, especially at least 60%, and preferably at least 70% freely accessible to the toxic chemical agents, especially chemical warfare agents, to be adsorbed.

25. Footwear according to one or more of the preceding claims, **characterized in that** the membrane (7) is a continuous, especially uninterrupted, membrane.

26. Footwear according to one or more of the preceding claims, **characterized in that** the thickness of the membrane (7) is 1 to 500 µm, especially 1 to 250 µm, preferably 1 to 100 µm, more preferably 1 to 50 µm, even more preferably 2.5 to 30 µm and most preferably 5 to 25 µm.

27. Footwear according to one or more of the preceding claims, **characterized in that** the membrane (7) at 25°C and a thickness of 50 µm has a water vapour transmission rate of at least 12.5 l/m² per 24 h, especially at least 17.5 l/m² per 24 h and preferably at least 20 l/m² per 24 h or more.

28. Footwear according to one or more of the preceding claims, **characterized in that** the membrane (7) when 50 µm thick has a water vapour transmission resistance Rₑₜ under steady state conditions, measured to DIN EN 31 092:1993 (February 1994) and international standard ISO 11 092, of not more than 25 (m²·pascal)/watt, especially not more than 20 (m²·pascal)/watt and preferably not more than 13 (m²·pascal)/watt at 35°C.

29. Footwear according to one or more of the preceding claims, **characterized in that** the membrane (7) is at most only minimally swellable or only minimally capable of taking up water, especially wherein the swellability or the water take-up capacity of the membrane (7) is at most 35% and especially at most 25%, based on the own weight of the membrane (7).

30. Footwear according to one or more of the preceding claims, **characterized in that** the membrane (7) is at least essentially impermeable to liquids, especially water, and to aerosols, or at least retards their passage.

31. Footwear according to one or more of the preceding claims, **characterized in that** the membrane (7) has no or essentially no strongly hydrophilic groups, in particular no hydroxyl groups, and/or **in that** the membrane (7) has weakly hydrophilic groups, especially polyether groups.

32. Footwear according to one or more of the preceding claims, **characterized in that** the membrane (7) comprises and/or consists of a plastic or a polymer, especially wherein the plastic and/or the polymer can be selected from the group of polyurethanes, polyether amides, polyester amides, polytetrafluoroethylenes and/or cellulose-based polymers and/or derivatives of the aforementioned compounds.

33. Footwear according to one or more of the preceding claims, **characterized in that** the membrane (7) is obtained as product of the reaction of an isocyanate, especially of a masked or blocked isocyanate, with an isocyanate-reactive crosslinker, and/or **in that** the membrane (7) is a polyurethane-based membrane.

34. Footwear according to one or more of the preceding claims, **characterized in that** the membrane (7) comprises a multilayered laminate and/or a multilayered composite, especially wherein the laminate and/or the composite consists of at least two, preferably at least three interconnected layers or plies.

35. Footwear according to Claim 34, **characterized in that** the laminate or the composite comprises a core layer based on a cellulose-based polymer and two outer layers connected to the core layer, especially based on a polyurethane, a polyether amide and/or a polyester amide, especially wherein the core layer based on a cellulose-based polymer can be formed as a membrane 1 to 100 µm, especially 5 to 50 µm and preferably 10 to 20 µm in thickness, and/or especially wherein the two outer layers connected to the core layer can each be formed as a membrane 1 to 100 µm, especially 5 to 50 µm and preferably 5 to 20 µm in thickness.

36. Footwear according to one or more of the preceding claims, **characterized in that** the membrane (7) is disposed on a preferably sheetlike support layer.

37. Footwear according to one or more of the preceding claims, **characterized in that** the membrane (7) simultaneously constitutes the adhesive layer (11) for securing the adsorbent material (6) to the support (10) and/or **in that** the membrane (7) simultaneously serves not only as support (10) but also as adhesive layer (11) for the adsorbent material (6).

38. Footwear according to one or more of the preceding claims, **characterized in that** the footwear (1) has a barrier effect with regard to chemical warfare agents, especially bis[2-chloroethyl] sulphide (mustard gas, Hd, yellow cross), measured to CRDEC-SP-84010, method 2.2, permitting permeation of not more than 4 µg/cm² per 24 h, especially not more than 3.5 µg/cm² per 24 h, preferably not more than 3.0 µg/cm² per 24 h and more preferably not more than 12.5 µg/cm² per 24 h.

## Revendications

1. Chaussure (1), en particulier botte, avec une fonction de protection contre les poisons chimiques, en particulier contre les armes chimiques, avec une structure (2) à plusieurs couches, présentant une couche extérieure (3) écartée du pied lors du port de ladite chaussure, et une couche intérieure (4) associée à la couche extérieure (3), orientée vers le pied lors du port de ladite chaussure, en particulier une doublure interne de chaussure, une couche d'adsorption (5) étant disposée entre la couche extérieure (3) et la couche intérieure (4), avec un matériau d'adsorption (6) adsorbant les poisons chimiques, en particulier du charbon actif,
**caractérisée**
**en ce que** la chaussure (1) présente en outre au moins une membrane (7) au moins essentiellement imperméable aux poisons chimiques, en particulier aux armes chimiques, ou ralentissant du moins leur passage, la membrane (7) étant au moins réalisée de manière essentiellement imperméable à l'eau et à l'air, mais perméable à la vapeur d'eau et la membrane (7) étant disposée entre la couche extérieure (3) et la couche d'adsorption (5) ou entre la couche intérieure (4) et la couche d'adsorption (5).

2. Chaussure selon la revendication 1, **caractérisée en ce que** la membrane (7) est disposée entre la couche extérieure (3) et la couche d'adsorption (5).

3. Chaussure selon l'une ou plusieurs des revendications précédentes, **caractérisée en ce qu'**en outre, entre la couche intérieure (4) et la couche d'adsorption (5) ou encore entre la couche intérieure (4) et la membrane (7) ou encore, de préférence, entre la couche d'adsorption (5) et la membrane (7) est disposée une couche d'écartement (8), de préférence sous forme d'un non-tissé, d'une couche de mousse ou d'une structure plane textile, en particulier un tricot.

4. Chaussure selon l'une ou plusieurs des revendications précédentes, **caractérisée en ce que** les différentes couches (3, 4, 5, 7, 8) de la structure à couches (2) sont à chaque fois liées les unes aux autres.

5. Chaussure selon l'une ou plusieurs des revendications précédentes, **caractérisée en ce que** la chaussure (1) est équipée d'une semelle (9) au moins essentiellement imperméable à l'eau et à l'air, qui est au moins essentiellement imperméable aux poisons chimiques, en particulier aux armes chimiques, ou qui ralentit au moins leur passage.

6. Chaussure selon l'une ou plusieurs des revendications précédentes, **caractérisée en ce que** la couche extérieure (3) est formée par un matériau respirant, en particulier perméable à la vapeur d'eau, en particulier un cuir ou des polyamides, tels que le Nylon, ou **en ce que** la couche extérieure (3) est formée par un matériau synthétique, de préférence du caoutchouc butyle, des caoutchoucs, en particulier les caoutchoucs de chloroprène tels que les néoprènes ou les caoutchoucs fluorés, ou des élastomères fluorés.

7. Chaussure selon l'une ou plusieurs des revendications précédentes, **caractérisée en ce que** la couche extérieure (3) a été rendue oléophobe et/ou hydrophobe, en particulier par une imprégnation spéciale.

8. Chaussure selon l'une ou plusieurs des revendications précédentes, **caractérisée en ce que** la couche intérieure (4), en particulier la doublure interne de chaussure est réalisée sous forme d'un matériau textile, de préférence un matériau textile perméable à l'eau, en particulier une structure plane textile.

9. Chaussure selon l'une ou plusieurs des revendications précédentes, **caractérisée en ce que** la couche d'adsorption (5) est réalisée de manière discontinue.

10. Chaussure selon l'une ou plusieurs des revendications précédentes, **caractérisée en ce que** la couche d'adsorption (5) comprend des particules d'adsorption discrètes adsorbant les poisons chimiques, en particulier à base de charbon actif.

11. Chaussure selon l'une ou plusieurs des revendications précédentes, **caractérisée en ce que** le matériau d'adsorption (6) de la couche d'adsorption (5) est un matériau d'adsorption contenant du charbon actif ou constitué par celui-ci, de préférence un matériau à base de charbon actif, en particulier sous forme de particules et/ou de fibres de charbon actif.

12. Chaussure selon l'une ou plusieurs des revendications précédentes, **caractérisée en ce que** la couche d'adsorption (5) est réalisée sous forme d'un filtre d'adsorption plat et **en ce que** la couche d'adsorption (5) comprend un matériau d'adsorption (6) adsorbant les poisons chimiques, en particulier à base de charbon actif, de préférence sous forme de particules et/ou de fibres de charbon actif, le matériau d'adsorption (6) étant de préférence fixé sur un support (10), en particulier un support textile.

13. Chaussure selon la revendication 12, **caractérisée en ce que** le matériau d'adsorption (6) de la couche d'adsorption (5) est disposé sur le côté écarté du pied du support (10) lors du port de ladite chaussure.

14. Chaussure selon l'une ou plusieurs des revendications précédentes, **caractérisée en ce que** la couche d'adsorption (5) comprend comme matériau d'adsorption (6) des particules discrètes de charbon actif, de préférence sous forme de grains ou de billes.

15. Chaussure selon la revendication 14, **caractérisée en ce que** le diamètre moyen des particules de charbon actif est en particulier < 1,0 mm, de préférence < 0,8 mm, de préférence < 0,6 mm et/ou le diamètre moyen des particules de charbon actif est d'au moins 0,1 mm.

16. Chaussure selon la revendication 14 ou 15, **caractérisée en ce que** les particules de charbon actif sont appliquées en une quantité de 5 à 500 g/m², en particulier de 10 à 400 g/m², de préférence de 20 à 300 g/m², de préférence de 25 à 250 g/m², de manière particulièrement préférée de 50 à 150g/m², de manière tout particulièrement préférée 50 à 100 g/m², sur un support (10).

17. Chaussure selon l'une ou plusieurs des revendications 14 à 16, **caractérisée en ce que** les particules de charbon actif présentent une surface interne (BET) d'au moins 800 m²/g, en particulier d'au moins 900 m²/g, de préférence d'au moins 1000 m²/g, de préférence dans la plage de 800 à 1500 m²/g.

18. Chaussure selon l'une ou plusieurs des revendications 14 à 17, **caractérisée en ce que** les particules de charbon actif présentent une pression d'éclatement par particule individuelle de charbon actif, en particulier les grains ou les billes de charbon actif, d'au moins 5 Newtons, en particulier d'au moins 10 Newtons, et/ou jusqu'à 20 Newtons.

19. Chaussure selon l'une ou plusieurs des revendications précédentes, **caractérisée en ce que** la couche d'adsorption (5) comprend comme matériau d'adsorption (6) des fibres de charbon actif, en particulier sous forme d'une structure plane de charbon actif.

20. Chaussure selon la revendication 19, **caractérisée en ce que** la structure plane de charbon actif présente un poids surfacique de 20 à 200 g/m², en particulier de 30 à 150 g/m², de préférence de 50 à 120 g/m², et **en ce que** la structure plane de charbon actif est un tissu, un tricot, un mat ou un composite, en particulier à base de cellulose carbonisée et activée ou d'un acrylonitrile carbonisé et activé.

21. Chaussure selon l'une ou plusieurs des revendications précédentes, **caractérisée en ce que** le matériau d'adsorption (6) de la couche d'adsorption (5) est en outre imprégnée d'au moins un catalyseur.

22. Chaussure selon la revendication 21, **caractérisée en ce qu'**on utilise comme catalyseur des enzymes et/ou des ions métalliques, de préférence des ions de cuivre, d'argent, de cadmium, de platine, de palladium, de zinc et/ou de mercure.

23. Chaussure selon la revendication 21 ou 22, **caractérisée en ce que** la quantité de catalyseur est de 0,05 à 12% en poids, de préférence de 1 à 10% en poids, de manière particulièrement préférée de 2 à 8% en poids par rapport au poids de la couche d'adsorption (5).

24. Chaussure selon l'une ou plusieurs des revendications précédentes, **caractérisée en ce que** le matériau d'adsorption (6) de la couche d'adsorption (5) est accessible librement à raison d'au moins 50%, en particulier d'au moins 60%, de préférence d'au moins 70%, pour les poisons chimiques à adsorber, en particulier les armes chimiques.

25. Chaussure selon l'une ou plusieurs des revendications précédentes, **caractérisée en ce que** la membrane (7) est une membrane continue, en particulier fermée.

26. Chaussure selon l'une ou plusieurs des revendications précédentes, **caractérisée en ce que** l'épaisseur de la membrane (7) est de 1 à 500 µm, en particulier de 1 à 250 µm, de préférence de 1 à 100 µm, de préférence de 1 à 50 µm, de manière particulièrement préférée de 2,5 à 30 µm, de manière tout particulièrement préférée de 5 à 25 µm.

27. Chaussure selon l'une ou plusieurs des revendications précédentes, **caractérisée en ce que** la membrane (7) présente, à 25°C et à une épaisseur de 50 µm, une perméabilité à la vapeur d'eau d'au moins 12,5 l/m² par 24 h, en particulier d'au moins 17,5 l/m² par 24 h, de préférence d'au moins 20 l/m² par 24 h ou plus.

28. Chaussure selon l'une ou plusieurs des revendications précédentes, **caractérisée en ce que** la membrane (7) présente une résistance au passage de la vapeur d'eau Rₑₜ dans des conditions stationnaires, mesurée selon la norme DIN EN 31 092:1993 (février 1994) et la norme internationale ISO 11 092, à 35°C, d'au plus 25 (m².Pascal)/Watt, en particulier d'au plus 20 (m².Pascal)/Watt, de préférence d'au plus 13 (m².Pascal)/Watt, à une épaisseur de 50 µm.

29. Chaussure selon l'une ou plusieurs des revendications précédentes, **caractérisée en ce que** la membrane (7) n'est dans tous les cas que faiblement apte au gonflement ou à l'absorption d'eau, l'aptitude au gonflement ou l'aptitude à l'absorption d'eau de la membrane (7) étant en particulier d'au plus 35%, en particulier d'au plus 25%, par rapport au poids propre de la membrane (7).

30. Chaussure selon l'une ou plusieurs des revendications précédentes, **caractérisée en ce que** la membrane (7) est au moins essentiellement imperméable aux liquides, en particulier à l'eau, et au moins essentiellement imperméable aux aérosols ou ralentit du moins leur passage.

31. Chaussure selon l'une ou plusieurs des revendications précédentes, **caractérisée en ce que** la membrane (7) ne présente pas de groupes fortement hydrophiles ou essentiellement pas de groupes fortement hydrophiles, en particulier pas de groupes hydroxyle et/ou **en ce que** la membrane (7) présente des groupes faiblement hydrophiles, en particulier des groupes polyéther.

32. Chaussure selon l'une ou plusieurs des revendications précédentes, **caractérisée en ce que** la membrane (7) comprend un matériau synthétique ou un polymère et/ou est constitué par celui-ci, le matériau synthétique et/ou le polymère pouvant en particulier être choisi dans le groupe des polyuréthanes, des polyétheramides, des polyesteramides, des polytétrafluoroéthylènes et/ou des polymères à base de cellulose et/ou des dérivés des composés susmentionnés.

33. Chaussure selon l'une ou plusieurs des revendications précédentes, **caractérisée en ce que** la membrane (7) est obtenue comme produit de réaction à partir de la réaction d'un isocyanate, en particulier d'un isocyanate masqué ou bloqué, avec un réticulant réactif avec isocyanate et/ou **en ce que** la membrane (7) est une membrane à base de polyuréthane.

34. Chaussure selon l'une ou plusieurs des revendications précédentes, **caractérisée en ce que** la membrane (7) est réalisée sous forme d'un laminé à plusieurs couches et/ou d'un composite à plusieurs couches, le laminé et/ou le composite étant en particulier constitué par au moins deux, de préférence au moins trois, couches assemblées l'une avec l'autre.

35. Chaussure selon la revendication 34, **caractérisée en ce que** le laminé ou le composite comprend une couche centrale à base d'un polymère à base de cellulose et deux couches extérieures assemblées avec la couche centrale, en particulier à base d'un polyuréthane, d'un polyétheramide et/ou d'un polyesteramide, la couche centrale à base d'un polymère à base de cellulose pouvant en particulier être réalisée sous forme d'une membrane d'une épaisseur de 1 à 100 µm, en particulier de 5 à 50 µm, de préférence de 10 à 20 µm et/ou les couches externes assemblées avec la couche centrale pouvant en particulier à chaque fois être réalisées sous forme d'une membrane d'une épaisseur de 1 à 100 µm, en particulier de 5 à 50 µm, de préférence de 5 à 20 µm.

36. Chaussure selon l'une ou plusieurs des revendications précédentes, **caractérisée en ce que** la membrane (7) est disposée sur une couche support de préférence plane.

37. Chaussure selon l'une ou plusieurs des revendications précédentes, **caractérisée en ce que** la membrane (7) représente simultanément la couche adhésive (11) pour la fixation du matériau d'adsorption (6) sur le support (10) ou **en ce que** la membrane (7) sert simultanément de support (10) ainsi que de couche adhésive (11) pour le matériau d'adsorption (6).

38. Chaussure selon l'une ou plusieurs des revendications précédentes, **caractérisée en ce que** la chaussure (1) présente un effet de barrière contre les armes chimiques, en particulier le sulfure de bis[2-chloroéthyle] (gaz moutarde, LOST, Gelbkreuz), mesurée selon la norme CRDEC-SP-84010, procédé 2.2, d'au plus 4 µg/cm² par 24 h, en particulier d'au plus 3,5 µg/cm² par 24 h, de préférence d'au plus 3,0 µg/cm² par 24 h, de manière particulièrement préférée d'au plus 2,5 µg/cm² par 24 h.
